# FASCICULE DE BREVET EUROPEEN

(11) **EP 3 202 002 B1**
(45) Date de publication et mention de la délivrance du brevet: **06.11.2019**
(21) Numéro de dépôt: 15778991.8
(22) Date de dépôt: 22.09.2015
(51) Int. Cl.: H02G 3/04

(54) **CONNEXION DE CÂBLES RÉSISTANTE AU FEU**
FEUERBESTÄNDIGE KABELVERBINDUNG
FIRE-RESISTANT CABLE CONNECTION

(30) Priorité: 03.10.2014 FR 1459477
(43) Date de publication de la demande: 09.08.2017
(73) Titulaire: Nexans, 92400 Courbevoie (FR)
(72) Inventeur: GYPPAZ, Franck, 69003 Lyon (FR); AUVRAY, Thierry, 69006 Lyon (FR)
(74) Mandataire: Peguet, Wilfried
(86) Numéro de dépôt international: PCT/FR2015/052539
(87) Numéro de publication internationale: WO 2016/051049

(56) Documents cités:
- DE-A1- 19 614 853
- JP-A- 2013 060 543

## Description

La présente invention concerne une connexion de câbles résistante au feu, son utilisation, un procédé de raccordement de câbles mettant en oeuvre une telle connexion résistante au feu, et une ligne de câbles résistante au feu comprenant une telle connexion résistante au feu.

Elle s'applique typiquement mais non exclusivement aux câbles de sécurité résistants au feu, notamment sans halogène, susceptibles de fonctionner pendant un laps de temps donné dans des conditions d'incendie, sans être pour autant propagateur d'incendie ni générateur de fumées importantes. Ces câbles de sécurité sont en particulier des câbles de transport d'énergie à moyenne tension (notamment de 6 à 45-60 kV) ou des câbles de transmission basse fréquence, tels que des câbles de contrôle ou de signalisation.

En particulier, la présente invention s'applique au raccordement d'au moins deux câbles de sécurité résistants au feu. En effet, lorsqu'une partie d'un câble de sécurité résistant au feu a été endommagée, notamment au cours d'un incendie ; ou lorsque l'on souhaite tout simplement augmenter la longueur d'un câble de sécurité résistant au feu, il est connu de remplacer la totalité dudit câble par un nouveau câble de sécurité résistant au feu présentant la longueur désirée. Cette solution permet ainsi de fournir un nouveau câble de sécurité qui va éviter la propagation de la flamme et résister au feu afin de fonctionner le plus longtemps possible et limiter sa dégradation dans des conditions thermiques extrêmes telles qu'un incendie. Toutefois, cette solution est coûteuse.

Des boîtiers de connexion dit « résistants au feu » permettant de raccorder des câbles sont disponibles sur le marché tels que ceux commercialisés par Hensel sous les références FK 7105 et FK9105. Ces boîtiers sont fixés sur les câbles et sont soit en un matériau polymère sans halogène de type résine polyester thermodurcissable renforcée par des fibres de verre ou résine phénolique thermodurcissable (i.e. en matériau duroplastique), soit en acier. Cependant, ce type de boîtier est très volumineux et n'est pas optimisé pour raccorder deux câbles résistants au feu. En effet, le système de fixation d'un tel boîtier ne permet pas d'assurer une protection thermique des deux câbles lorsqu'un incendie se produit, notamment au niveau de la zone de connexion. En particulier, le boîtier peut être déformé sous l'effet de la chaleur (e.g. lorsque la température est supérieure à 1000°C environ). La déformation du boîtier engendre la détérioration des différentes couches polymères des deux câbles au niveau de la zone de connexion et dans certains cas, celle des éléments électriquement conducteurs allongés, notamment lorsqu'ils comprennent de l'aluminium (température de fusion de l'ordre de 660°C).

Généralement, afin de rendre un ou plusieurs câbles résistants au feu, il est connu de recouvrir lesdits câbles d'une couche électriquement isolante (i.e. d'une enveloppe de protection résistante au feu) comprenant plusieurs bandes isolantes superposées comprenant du mica et des fibres de verre, et un liant polymère (e.g. polyorganosiloxane) au contact de chacune desdites bandes isolantes. EP2760030A1 décrit une telle enveloppe. Toutefois, son coût de production est élevé (i.e. procédé de préparation de l'enveloppe de protection long et complexe) et celle-ci présente un grand encombrement. En outre, cette enveloppe de protection est difficile à installer au niveau d'une zone de connexion car elle s'adapte difficilement à des sections de diamètre différent le long des câbles.

D'autres matériaux tels que la pierre, la brique, le ciment, le plomb, l'acier, le béton, la laine de roche, les céramiques, les géopolymères, etc... ont des propriétés de résistance au feu.

Le ciment est une matière minérale pulvérulente formant avec l'eau ou avec une solution saline une pâte de ciment liante, capable d'agglomérer, en durcissant, des substances variées. Le durcissement se produit par simple hydratation d'aluminates de calcium et de silicates de calcium et la pâte de ciment liante conserve après durcissement, sa résistance et sa stabilité. Cette pâte de ciment liante est également appelée matériau cimentaire. Les ciments sont classés selon la norme EN-197-1-2000 en cinq grandes familles : le ciment Portland (CEM I), le ciment portland composé (CEM II), le ciment de hauts fourneaux (CEM III), le ciment pouzzolanique (CEM IV) et le ciment composé ou ciment au laitier et aux cendres (CEM V). Le ciment blanc est un ciment Portland sans oxyde métallique. Le ciment artificiel est généralement obtenu par cuisson de mélanges de silice, d'alumine, de carbonate de chaux, et éventuellement d'oxydes métalliques tels que l'oxyde de fer.

Les géopolymères sont considérés comme des liants alternatifs pouvant se substituer aux matériaux cimentaires précités. Les géopolymères sont essentiellement des composés chimiques minéraux ou des mélanges de composés constitués de motifs de type silico-oxyde (-Si-O-Si-O-), silico-aluminate (-Si-O-Al-O-), ferro-silico-aluminate (-Fe-O-Si-O-Al-O-), ou alumino-phosphate (-Al-O-P-O-), créés par un processus de géopolymérisation (i.e. polycondensation). Les géopolymères peuvent être utilisés seuls ou en mélange avec des polymères organiques, des fibres minérales, métalliques, ou organiques (e.g. fibres de verre, fibres céramiques, etc...), du carbone, du graphite, etc... selon le type d'application recherchée. Parmi les géopolymères, on distingue ceux capables de polymériser et de durcir à la température ambiante, on parle alors de ciments géopolymères et ceux qui polymérisent et durcissent sous l'action de la chaleur (i.e. à une température supérieure à 200°C), on parle alors plutôt de liants géopolymères.

Les géopolymères les plus courants sont ceux basés sur les aluminosilicates désignés sous le terme « poly(sialate) » [ou « poly(silico-oxo-aluminate » ou (-Si-O-Al-O-)ₙ avec n désignant le degré de polymérisation]. Ces géopolymères aluminosilicates résultent de la polycondensation d'oligomères de type oligo(sialate) formés à partir d'un mélange d'au moins un aluminosilicate, d'un réactif alcalin (e.g. silicate de sodium ou de potassium) et d'eau. Les géopolymères basés sur les aluminosilicates ont été groupés en trois familles en fonction du rapport atomique Si/AI, lequel pouvant être égale à 1, 2 ou 3. On distingue les poly(sialates) répondant à la formule Mₙ(-Si-O-Al-O-)ₙ ou (M)-PS, les poly(sialate-siloxos) répondant à la formule Mₙ(-Si-O-Al-O-Si-O-)ₙ ou (M)-PPS, et les poly(sialate-disiloxos) répondant à la formule Mₙ(-Si-O-Al-O-Si-O-Si-O)ₙ ou (M)-PSDS, avec M représentant au moins un cation alcalin ou alcalino-terreux tel que K, Na, ou Ca et n désignant le degré de polymérisation.

Les liants et ciments géopolymères sont utilisés dans de nombreuses applications : conception de nouveaux matériaux dans les domaines du génie civil et de la construction, création de sculptures, fabrication de cloisons et de portes coupe-feu pour la protection contre les incendies, et tout récemment comme structure de la « boîte noire » embarquée dans les avions.

A titre d'exemple, la demande de brevet US 6,831,118 décrit un panneau anti-feu flexible comprenant une matrice en matière plastique (e.g. polyuréthane élastique souple) et un matériau de remplissage inorganique (e.g. grains de géopolymères) qui peut être utilisé pour la protection contre le feu des ouvertures dans les murs, et également des passages pour câbles.

Des compositions géopolymères sont également connues pour remplir et boucher des passages pour câbles de manière à éviter la propagation d'un incendie d'une pièce à une autre. En particulier, la demande de brevet JP2013-060543 décrit une composition géopolymère comprenant de 25 à 65% en masse d'une solution de silicate de sodium (également bien connu sous l'anglicisme « *waterglass* ») ; de 10 à 45% en masse d'hydroxyde de magnésium ou d'aluminium ; de 10 à 45% en masse de charge inactive telle que du talc ; et de 2 à 10% d'une dispersion de microparticules de caoutchouc (e.g. styrène-butadiène) dans un milieu aqueux, ladite dispersion comprenant de 30 à 60% en masse desdites microparticules.

Par conséquent, aucun document de l'art antérieur ne décrit une composition ou un matériau à base de géopolymères permettant le raccordement de câbles résistants au feu. Par ailleurs, la présence de caoutchouc dans la composition de JP2013-060543 ralentit sa polymérisation à température ambiante et n'est donc pas adaptée pour permettre un raccordement rapide de câbles résistants au feu et assurer une bonne protection thermique desdits câbles. Enfin, le matériau flexible de US 6,831,118 ne peut être installé facilement autour de câbles résistants au feu tout en maintenant une bonne connexion entre eux, et ne permet pas non plus d'assurer une protection thermique desdits câbles, notamment lors d'un incendie. DE 196 14 853 A1 décrit un art antérieur correspondant au préambule de la revendication 1.

Le but de la présente invention est de pallier les inconvénients des techniques de l'art antérieur en proposant une connexion de câbles résistante au feu permettant de raccorder efficacement et rapidement au moins deux câbles résistants au feu, ladite connexion permettant notamment d'éviter la dégradation des couches polymères électriquement isolantes desdits câbles lors d'un incendie. La connexion de la présente invention doit également permettre d'éviter le remplacement d'une ligne de câbles résistante au feu lorsque l'on souhaite la rallonger ou remplacer une partie défectueuse de celle-ci.

Un autre but de l'invention est de fournir un procédé de raccordement de câbles résistants au feu mettant en oeuvre une telle connexion résistante au feu, ledit procédé étant facile à mettre en oeuvre et permettant de garantir et de maintenir une bonne connexion entre les câbles, notamment en cas d'incendie.

La présente invention a pour premier objet une connexion d'au moins deux câbles résistants au feu selon la revendication 1.

Dans la présente invention, le terme « connexion de câbles » signifie également jonction de câbles.

La couche comportant au moins un matériau cimentaire représente une enveloppe de protection qui épouse facilement et parfaitement la structure et les reliefs propres aux deux câbles, notamment au niveau de la zone de connexion, tout en limitant son encombrement.

Dans la présente invention, l'expression « matériau cimentaire » signifie un matériau solide comprenant du silicium (Si), de l'aluminium (Al), de l'oxygène (O) et au moins un élément choisi parmi le potassium (K), le sodium (Na), le lithium (Li), le césium (Cs) et le calcium (Ca), ledit matériau solide étant un ciment géopolymère ou étant issu d'un mélange constitué d'un ciment anhydre conventionnel et d'eau.

Le matériau cimentaire de l'invention est différent d'une céramique. En effet, une céramique se distingue d'un matériau cimentaire à ce qu'elle est obtenue à partir d'au moins une étape de frittage (densification d'une poudre sous l'effet de la chaleur). Un matériau cimentaire est obtenu à partir d'au moins une étape de durcissement ou prise, notamment par hydratation ou polycondensation.

Dans la présente invention, les extrémités dénudées et aboutées desdits câbles sont uniquement constituées d'une partie des éléments électriquement conducteurs allongés « nus » de chacun des câbles résistants au feu, et ne sont pas entourées de gaine électriquement isolante et de toute autre couche électriquement isolante ou semi-conductrice. Ces extrémités dénudées et aboutées desdits câbles définissent une zone de connexion qui ne comprend donc pas de gaine électriquement isolante et éventuellement d'autres couches électriquement isolantes ou semi-conductrices.

La couche comportant au moins un matériau cimentaire est de préférence la couche la plus externe de la zone de connexion.

La gaine électriquement isolante des câbles résistants au feu est de préférence sans halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant »).*

La gaine électriquement isolante de chacun des câbles résistants au feu représente la couche la plus externe dudit câble (i.e. également appelée gaine extérieure de protection).

Elle comprend au moins un matériau polymère.

Le choix du matériau polymère n'est pas limitatif et ceux-ci sont bien connus de l'homme du métier.

Selon une forme de réalisation préférée de l'invention, le matériau polymère est choisi parmi les polymères réticulés et non réticulés, les polymères du type inorganique et du type organique.

Le matériau polymère peut être un homo- ou un co-polymère ayant des propriétés thermoplastiques et/ou élastomères.

Les polymères du type inorganique peuvent être des polyorganosiloxanes.

Les polymères du type organique peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), ou les terpolymères d'éthylène et de propylène (EPT) tels que par exemple les terpolymères d'éthylène propylène diène monomère (EPDM).

La couche comportant au moins un matériau cimentaire est de préférence en contact physique direct avec la partie de chaque gaine électriquement isolante qu'elle entoure (i.e. en dehors de la zone de connexion).

Chaque câble résistant au feu peut comprendre une pluralité d'éléments électriquement conducteurs allongés. Ainsi, la gaine électriquement isolante de chaque câble résistant au feu entoure la pluralité d'éléments électriquement conducteurs allongés de chaque câble résistant au feu.

Dans un mode de réalisation particulier, la connexion comprend en outre un élément métallique permettant de connecter de façon permanente lesdites extrémités dénudées et aboutées des câbles, notamment par sertissage.

L'élément métallique peut être en cuivre, en alliage de cuivre, en aluminium ou en alliage d'aluminium.

L'élément métallique peut entourer une partie ou la totalité des extrémités dénudées et aboutées desdits câbles. Ainsi, l'élément métallique se situe au niveau de la zone de connexion, entre la couche comportant au moins un matériau cimentaire et les extrémités dénudées et aboutées desdits câbles résistants au feu. Dans ce mode de réalisation, la couche comportant au moins un matériau cimentaire entoure l'élément métallique et une partie de chaque gaine électriquement isolante.

L'élément métallique est de préférence en contact physique direct avec au moins une partie des extrémités dénudées et aboutées des câbles.

Dans un mode de réalisation préféré, la connexion comprend en outre une couche constituée d'un matériau thermorétractable. Cette couche permet de protéger les extrémités dénudées et aboutées desdits câbles et éventuellement l'élément métallique de l'oxydation à l'air, notamment lors du raccordement des câbles.

La couche constituée d'un matériau thermorétractable peut entourer une partie ou la totalité des extrémités dénudées et aboutées desdits câbles ou l'élément métallique lorsqu'il est utilisé. Ainsi, la couche constituée d'un matériau thermorétractable se situe au niveau de la zone de connexion, entre la couche comportant au moins un matériau cimentaire et les extrémités dénudées et aboutées desdits câbles résistants au feu ou entre la couche comportant au moins un matériau cimentaire et l'élément métallique lorsqu'il est utilisé. Dans ce mode de réalisation, la couche comportant au moins un matériau cimentaire entoure la couche constituée d'un matériau thermorétractable et une partie de chaque gaine électriquement isolante.

Selon une forme de réalisation préférée de l'invention, le matériau thermorétractable peut être toute matière thermorétractable connue de l'homme du métier.

En particulier, le matériau thermorétractable peut être en polypropylène (PP), polyéthylène (PE), polyéthylène téréphtalate (PET), polychlorure de vinyle (PVC), ou polystyrène (PS).

Le matériau thermorétractable est de préférence en polypropylène, et de préférence encore en polypropylène réticulé.

La couche constituée d'un matériau thermorétractable est de préférence en contact physique direct avec la couche comportant au moins un matériau cimentaire.

La connexion peut comprendre en outre une ou plusieurs couches de type silicone (i.e. comprenant au moins un polyorganosiloxane). Lesdites couches peuvent être sous forme de bandes ou de rubans.

Les couches de type silicone peuvent entourer une partie de chaque gaine électriquement isolante et lesdites extrémités dénudées et aboutées desdits câbles, ou une partie de chaque gaine électriquement isolante et la couche constituée d'un matériau thermorétractable lorsqu'elle existe ou une partie de chaque gaine électriquement isolante et l'élément métallique lorsqu'il est utilisé et que la couche constituée d'un matériau thermorétractable n'est pas présente. Ainsi, les couches de type silicone se situent entre la couche comportant au moins un matériau cimentaire et les extrémités dénudées et aboutées desdits câbles résistants au feu ou entre la couche comportant au moins un matériau cimentaire et la couche constituée d'un matériau thermorétractable lorsqu'elle existe ou entre la couche comportant au moins un matériau cimentaire et l'élément métallique lorsqu'il est utilisé et que la couche constituée d'un matériau thermorétractable n'est pas présente. Dans ce mode de réalisation, la couche comportant au moins un matériau cimentaire entoure les couches de type silicone et éventuellement une partie de chaque gaine électriquement isolante.

La couche comportant au moins le matériau cimentaire est de préférence en contact physique direct avec au moins une des couches de type silicone.

La couche comportant au moins le matériau cimentaire est résistante au feu. En d'autres termes, elle reste intacte de la température ambiante à des températures supérieures ou égales à 1000°C, notamment atteintes lors d'un incendie, et peut subir des variations de température extrêmes sans se briser.

De préférence, la connexion de l'invention, et en particulier la couche comportant au moins le matériau cimentaire, satisfont à au moins l'une quelconque des normes de résistance au feu suivantes : EN50200, IEC60331-11, IEC60331-21, IEC60331-23, IEC60331-25, DIN4102, NBN713020 addendum 3, EN50577, NFC32070 CR1 et BS6387CWZ.

Avantageusement, la connexion de l'invention, et en particulier la couche comportant au moins le matériau cimentaire, satisfont à la norme de résistance au feu IEC 60331-11, avec des câbles électriques sous une tension de 20 kV à 775°C pendant 60 minutes.

La couche comportant au moins le matériau cimentaire peut présenter une épaisseur sensiblement constante, notamment le long de la zone de connexion. Elle peut être une enveloppe de protection continue.

Selon une forme de réalisation préférée de l'invention, la couche comportant au moins le matériau cimentaire présente une épaisseur allant de 0,5 à 5 cm environ, et de préférence allant de 1 à 4 cm environ.

La couche comportant au moins le matériau cimentaire peut présenter une longueur (i.e. dans le sens de la longueur du câble) d'au moins L₁ = L₀ + 40 environ, L₀ et L₁ ayant comme unité le cm, et L₀ représentant la longueur des extrémités des câbles dénudées et aboutées. En d'autres termes, la couche peut recouvrir les extrémités des câbles dénudées et aboutées et s'étendre sur une longueur d'environ 20 cm de chaque côté desdites extrémités de manière à recouvrir une partie des gaines électriquement isolantes de chacun des câbles.

Selon une première variante, le matériau cimentaire est issu d'un mélange constitué d'un ciment anhydre conventionnel et d'eau. Le durcissement provient alors de l'hydratation de silicates de calcium et d'aluminates de calcium.

Le ciment anhydre peut être du ciment Portland et en particulier du ciment blanc, ou du ciment au laitier et aux cendres.

Selon une deuxième variante, le matériau cimentaire est un ciment géopolymère.

Dans la présente invention, le terme ciment géopolymère, ou durcissement d'une composition géopolymère, indique que le durcissement s'effectue par réaction interne du type polycondensation ou du type hydrothermal et qu'il n'est pas le résultat d'un simple séchage, comme c'est généralement le cas pour des liants à base de silicates alcalins.

En effet, les ciments géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Le ciment géopolymère peut être un ciment géopolymère aluminosilicate pouvant présenter un rapport molaire Si/AI allant de 1 à 35.

Le ciment géopolymère aluminosilicate peut être choisi parmi les poly(sialates) répondant à la formule Mₙ(-Si-O-Al-O-)ₙ [(M)-PS], les poly(sialate-siloxos) répondant à la formule Mₙ(-Si-O-Al-O-Si-O-)ₙ [(M)-PPS], et les poly(sialate-disiloxos) répondant à la formule Mₙ(-Si-O-Al-O-Si-O-Si-O)ₙ [(M)-PSDS], avec M représentant au moins un cation alcalin K, Na, Li, Cs ou un de leurs mélanges, et n désignant le degré de polymérisation. Dans (M)-PS le rapport molaire Si/AI est de 1, dans (M)-PPS il est de 2, et dans (M)-PPS, il est de 3.

Le rapport molaire Si/AI influence les propriétés mécaniques du ciment géopolymère, en particulier ses propriétés de résistance à une contrainte mécanique. Avec un rapport molaire Si/AI préféré allant de 1,9 à 3 environ et de préférence encore allant de 1,9 à 2,5 environ, les propriétés de résistance à une contrainte mécanique de la couche sont optimales.

La couche comportant au moins le matériau cimentaire peut comprendre un ou plusieurs additifs polymères qui permettent notamment d'améliorer les propriétés mécaniques de ladite couche.

De tels additifs polymères peuvent être du polypropylène éventuellement sous forme de fibres ; un copolymère de styrène-butadiène (SBR) ; un copolymère de styrène-butadiène-éthylène (EBS) ; tous les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène- styrène (SEPS) ; un copolymère d'éthylène et d'acétate de vinyle (EVA), un polyorganosiloxane réticulé (e.g. à l'aide d'un péroxyde) ; du polyéthylène éventuellement sous forme de poudre ; des lignosulfonates ; de l'acétate de cellulose ; d'autres dérivés de la cellulose ou un de leurs mélanges.

La couche comportant au moins le matériau cimentaire peut comprendre de 10 à 80% en poids environ d'additifs polymères, de préférence de 30 à 50% en poids environ d'additifs polymères, et de préférence encore de 15 à 25% en poids environ d'additifs polymères, par rapport au poids total de ladite couche.

Les additifs polymères ne doivent pas altérer les propriétés électriques (e.g. résistance au feu) et mécaniques (e.g. résistance à une contrainte mécanique) de la couche comportant au moins un matériau cimentaire.

La couche comportant au moins le matériau cimentaire ne comprend pas de préférence de composés inorganiques autres que ceux constituant ou faisant partie du ciment géopolymère.

Selon une forme de réalisation préférée de l'invention, la couche comportant au moins le matériau cimentaire est uniquement constituée dudit ciment géopolymère.

Dans un mode de réalisation particulier, chacun des câbles résistants au feu comprend en outre, au moins une couche électriquement isolante entre la gaine électriquement isolante et l'élément électriquement conducteur allongé. Ainsi, la gaine électriquement isolante entoure la couche électriquement isolante et la couche électriquement isolante entoure l'élément électriquement conducteur allongé. Dans ce mode de réalisation, la couche comportant au moins un matériau cimentaire entoure une partie de chaque gaine électriquement isolante, une partie de chaque couche électriquement isolante et les extrémités dénudées et aboutées desdits câbles.

Lorsque chaque câble comprend une pluralité d'éléments électriquement conducteurs allongés, il comprend en outre une pluralité de couches électriquement isolantes, chaque couche électriquement isolante entourant individuellement chaque élément électriquement conducteur. Ainsi, la gaine électriquement isolante entoure la pluralité de couches électriquement isolantes, et chaque couche électriquement isolante entoure chaque élément électriquement conducteur allongé. Dans ce mode de réalisation, la couche comportant au moins un matériau cimentaire entoure une partie de chaque gaine électriquement isolante, une partie de chaque pluralité de couches électriquement isolantes, et les extrémités dénudées et aboutées desdits câbles.

La couche électriquement isolante peut comprendre au moins un matériau polymère choisi parmi les polymères réticulés et non réticulés, les polymères du type inorganique et du type organique.

Le matériau polymère peut être un homo- ou un co-polymère ayant des propriétés thermoplastiques et/ou élastomères.

Le matériau polymère est de préférence non halogéné.

Les polymères du type inorganique peuvent être des polyorganosiloxanes.

Les polymères du type organique peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), ou les terpolymères d'éthylène et de propylène (EPT) tels que par exemple les terpolymères d'éthylène propylène diène monomère (EPDM).

La couche électriquement isolante peut comprendre en outre, des charges ignifugeantes et/ou des charges inertes (ou charge non combustible).

Le choix des charges ignifugeantes et/ou des charges inertes n'est pas limitatif et celles-ci sont bien connues de l'homme du métier.

Les charges ignifugeantes peuvent être choisies parmi les charges hydratées, notamment parmi les hydroxydes métalliques tels que par exemple le dihydroxyde de magnésium (MDH) ou le trihydroxyde d'aluminium (ATH), et d'autres charges minérales telles que CaO ou les phyllosilicates.

Ces charges ignifugeantes agissent principalement par voie physique en se décomposant de manière endothermique (e.g. libération d'eau), ce qui a pour conséquence d'abaisser la température de la couche électriquement isolante et de limiter la propagation des flammes le long du câble. On parle notamment de propriétés de retard à la flamme, bien connues sous l'anglicisme « *flame retardant* ».

Les charges inertes peuvent être de la craie, du talc, de l'argile (e.g. le kaolin), du noir de carbone, ou des nanotubes de carbone.

La présente invention a pour deuxième objet un procédé de raccordement d'au moins deux câbles résistants au feu comprenant chacun au moins un élément électriquement conducteur allongé et au moins une gaine électriquement isolante entourant ledit élément électriquement conducteur allongé, ledit procédé étant caractérisé en ce qu'il met en oeuvre une connexion telle que définie dans le premier objet de l'invention et en ce qu'il comprend au moins les étapes suivantes :
i) une étape de mise à nu des extrémités desdits câbles destinées à être connectées et d'aboutement desdites extrémités mises à nu (i.e. dénudées) desdits câbles,
ii) une étape de moulage d'une composition géopolymère ou d'un mélange constitué d'un ciment anhydre conventionnel et d'eau, autour desdites extrémités dénudées et aboutées desdits câbles et d'une partie de chaque gaine électriquement isolante, et
iii) une étape de durcissement de la composition géopolymère ou du mélange constitué d'un ciment anhydre conventionnel et d'eau (i.e. pâte de ciment) pour former une couche comportant au moins un matériau cimentaire et entourant une partie de chaque gaine électriquement isolante et lesdites extrémités dénudées et aboutées desdits câbles.

Le procédé conforme à l'invention est rapide et simple. Il permet de raccorder des câbles résistants au feu afin de rallonger une ligne de câble(s) résistante au feu, ou de remplacer une partie défectueuse d'une ligne de câble(s) tout en maintenant ses propriétés de résistance au feu.

L'étape i) permet d'assurer le contact physique et électrique entre lesdits câbles.

Le ciment anhydre conventionnel utilisé dans l'étape ii) est tel que défini dans le premier objet de l'invention.

La composition géopolymère de l'étape ii) peut être une composition géopolymère aluminosilicate.

La composition géopolymère de l'étape ii) répond alors de préférence à la composition molaire suivante (I) :

w SiO₂ : x Al₂O₃ : y M₂O : z H₂O (I)

dans laquelle :
- M est choisi parmi Na, K, Li, Cs et un de leurs mélanges,
- w est une valeur comprise entre 0,1 et 8 environ,
- x est une valeur comprise entre 0,1 et 0,3 environ,
- y est une valeur comprise entre 0,05 et 0,2 environ,
- w est une valeur comprise entre 0,8 et 3 environ,
ladite composition comprenant de 40% à 79% en masse environ de matières solides (SiO₂, Al₂O₃, M₂O), par rapport à la masse totale de ladite composition.

Le rapport massique eau/matière solides dans ladite composition géopolymère détermine la cinétique de solidification lors de l'étape iii). Ainsi, un faible rapport massique eau/matière solides peut réduire le temps de prise à température ambiante.

Le procédé peut comprendre en outre avant l'étape ii), une étape ii₀) de préparation d'une composition géopolymère.

L'étape ii₀) est généralement effectuée à un pH élevé, notamment strictement supérieur à 13.

Lorsque la composition est une composition géopolymère aluminosilicate, l'étape ii₀) comprend de préférence les sous-étapes suivantes :
ii₀₋₁) une étape de préparation d'une solution aqueuse de silicate alcalin de rapport molaire SiO₂/M₂O allant de 1,65 à 3,4 environ, la concentration massique du silicate alcalin dans l'eau pouvant aller de 35 à 90 % environ, et
ii₀₋₂) une étape de mélange d'un aluminosilicate sous forme de poudre de rapport molaire Al₂O₃/SiO₂ allant de 0,4 à 0,8 avec la solution aqueuse de silicate alcalin préparée à l'étape précédente, la concentration massique de l'aluminosilicate dans la solution aqueuse de silicate alcalin préparée à l'étape précédente pouvant aller de 10 à 80% environ, et de préférence de 25% à 65% environ.

L'aluminosilicate peut être choisi parmi le métakaolin (i.e. kaolin calciné), les cendres volantes (bien connues sous l'anglicisme « fly ash »), le laitier de haut fourneau (bien connu sous l'anglicisme « blast furnace slag »), les argiles gonflantes telles que la bentonite, les argiles calcinées, tout type de composé comprenant de l'aluminium et de la fumée de silice, les zéolithes et un de leurs mélanges. On préfèrera les aluminosilicates commercialisés par la société Imérys tels que le métakaolin.

La solution aqueuse de silicate alcalin peut être préparée en mélangeant du dioxyde de silicium SiO₂ ou un silicate alcalin avec une base MOH.

Le dioxyde de silicium SiO₂ peut être choisi parmi la fumée de silice (i.e. silice pyrogénée), le quartz, et leur mélange.

Le silicate alcalin peut être choisi parmi les silicates de sodium, les silicates de potassium et un de leurs mélanges. On préfèrera les silicates alcalins commercialisés par la société Silmaco et la société PQ Corporation.

La base MOH peut être choisie parmi KOH, NaOH et leur mélange.

L'étape ii₀₋₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de l'étape ii₀₋₁) et de l'aluminosilicate lors de l'étape ii₀₋₂) et de ce fait la prise de la composition géopolymère.

A l'issue de l'étape ii₀₋₂), la composition géopolymère présente une viscosité qui augmente avec le temps. Elle ne peut donc pas être stockée et elle doit immédiatement être utilisée dans l'étape suivante ii) de moulage.

Le procédé peut comprendre en outre après l'étape i), une étape i₁) de connexion permanente des extrémités dénudées et aboutées desdits câbles au moyen d'un élément métallique. Dans ce mode de réalisation, la connexion comprend en outre ledit élément métallique.

L'élément métallique est tel que défini dans le premier objet de l'invention.

L'étape i₁) peut être effectuée par sertissage.

Le procédé peut comprendre en outre entre l'étape i) et l'étape ii) ou entre l'étape i) et l'étape i₁), une étape i₂) d'application d'une couche constituée d'un matériau thermorétractable autour des extrémités dénudées et aboutées desdits câbles ou autour de l'élément métallique. Dans ce mode de réalisation, la connexion comprend en outre ladite couche constituée d'un matériau thermorétractable.

La couche constituée d'un matériau thermorétractable est telle que définie dans le premier objet de l'invention.

Le procédé peut comprendre en outre entre l'étape i) et l'étape ii) ou entre l'étape i₁) et l'étape ii) ou entre l'étape i₂) et l'étape ii), une étape i₃) d'application d'une ou plusieurs couches de type silicone autour des extrémités dénudées et aboutées desdits câbles et d'une partie de chaque gaine électriquement isolante ou autour de l'élément métallique et d'une partie de chaque gaine électriquement isolante ou autour de la couche constituée d'un matériau thermorétractable et d'une partie de chaque gaine électriquement isolante.

Les couches de type silicone sont telles que définies dans le premier objet de l'invention.

La composition géopolymère (respectivement la pâte de ciment) peut comprendre un ou plusieurs additifs polymères qui permettent notamment d'améliorer les propriétés mécaniques de ladite composition, un ou plusieurs dispersants, un ou plusieurs composés accélérant la prise (i.e. le durcissement de la composition géopolymère, respectivement de la pâte de ciment), ou un de leurs mélanges.

A titre d'exemples d'additifs polymères, on peut citer un polypropylène éventuellement sous forme de fibres ; un copolymère de styrène-butadiène (SBR) ; un copolymère de styrène-butadiène-éthylène (EBS) ; tous les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène- styrène (SEPS) ; un copolymère d'éthylène et d'acétate de vinyle (EVA), un polyorganosiloxane réticulé (e.g. à l'aide d'un péroxyde) ; du polyéthylène éventuellement sous forme de poudre ; des lignosulfonates ; de l'acétate de cellulose ; d'autres dérivés de la cellulose ou un de leurs mélanges.

A titre d'exemples de dispersants, c'est-à-dire des composés qui permettent d'améliorer les propriétés rhéologiques de la composition géopolymère ou de la pâte de ciment, on peut citer un condensat d'acide naphtalène sulfonique-formaldéhyde, un condensat d'acétone-formaldéhyde-sulfite, un condensat de sulfonate de mélamine-formaldéhyde, ou un de leurs mélanges.

A titre d'exemples de composés accélérant la prise (i.e. le durcissement de la composition géopolymère ou de la pâte de ciment), on peut citer le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III), les lignosulfonates de sodium ou un de leurs mélanges.

La couche comportant au moins un matériau cimentaire peut comprendre de 15 à 30% en poids environ de composés accélérant la prise par rapport au poids total de ladite couche.

La composition géopolymère (respectivement la pâte de ciment) ne comprend pas de préférence de composés inorganiques autres que ceux participant à la formation du matériau cimentaire.

Selon une forme de réalisation préférée de l'invention, la composition géopolymère (respectivement la pâte de ciment) est uniquement constituée de composés participant à la formation du matériau cimentaire.

L'étape ii) de moulage est réalisée de préférence dans un moule cylindrique, par exemple en coulant la composition géopolymère ou la pâte de ciment sur lesdites extrémités dénudées et aboutées desdits câbles et une partie de chaque gaine électriquement isolante.

L'étape iii) est généralement effectuée à température ambiante puisque la polymérisation (dans le cas de la formation du ciment géopolymère) ou l'hydratation (dans le cas de la formation du matériau cimentaire issu d'un mélange constitué d'un ciment anhydre conventionnel et d'eau) s'effectue à température ambiante.

La vitesse de durcissement de l'étape iii) peut aller de 30 à 300 minutes environ à 25°C environ (i.e. à la température ambiante).

Cependant, il est tout à fait possible d'accélérer le durcissement de la composition géopolymère ou de la pâte de ciment en effectuant l'étape iii) à une température allant de 70°C à 200°C environ, notamment à l'aide d'un four à convection conventionnel, d'un four à infrarouge ou d'un four à micro-ondes.

Le procédé de l'invention peut comprendre en outre, une étape iv) de démoulage.

La présente invention a pour troisième objet l'utilisation d'une connexion telle que définie dans le premier objet de l'invention, pour rallonger une ligne de câble(s) résistante au feu ou pour remplacer une partie défectueuse d'une ligne de câble(s) résistante au feu.

La présente invention a pour quatrième objet une ligne de câble résistante au feu comprenant au moins :
- un premier câble résistant au feu comprenant au moins un élément électriquement conducteur allongé et au moins une gaine électriquement isolante entourant ledit élément électriquement conducteur allongé, et
- une second câble résistant au feu comprenant au moins un élément électriquement conducteur allongé et au moins une gaine électriquement isolante entourant ledit élément électriquement conducteur allongé,
les extrémités desdits câbles destinées à être connectées étant dénudées et aboutées de manière à assurer un contact physique et électrique entre lesdits câbles,
ladite ligne de câble étant caractérisée en ce qu'elle comprend en outre, une connexion telle que définie dans le premier objet de l'invention.

Les exemples suivants permettent d'illustrer la présente invention. Ils n'ont pas de caractère limitatif sur la portée globale de l'invention telle que présentée dans les revendications. Les rapports entre les oxydes sont des rapports molaires et les % indiqués sont en poids.

### EXEMPLES

Les matières premières utilisées dans les exemples, sont listées ci-après :
- solution aqueuse de silicate de sodium à 50% massique environ de type « *waterglass* », Simalco, de formule Na₂O. 2 SiO₂ et de rapport molaire SiO₂/Na₂O de 2 environ,
- eau courante,
- hydroxyde de potassium, Sigma Aldrich, de pureté > 85%,
- aluminosilicate, PoleStar® 450, Imerys, de rapport molaire Al₂O₃/SiO₂ de 41/55 (i.e. de 0,745 environ).

Sauf indications contraires, toutes ces matières premières ont été utilisées telles que reçues des fabricants.

### Exemple 1 : procédé de raccordement de deux câbles résistants au feu conforme à l'invention

### 1.1. Préparation d'une composition géopolymère aluminosilicate (étape ii₀)

Une solution de silicate alcalin est préparée en mélangeant 1000 g d'une solution aqueuse de silicate de sodium, 300 g d'eau et 180 g d'hydroxyde de potassium. Puis 600 g d'aluminosilicate ont été mélangés avec la solution de silicate alcalin pour former une composition géopolymère aluminosilicate.

Ladite composition géopolymère aluminosilicate comprenait 54% en masse environ de matières solides par rapport à la masse totale de ladite composition.

La composition géopolymère aluminosilicate avait la composition molaire de formule (I) suivante :

0,54 SiO₂ : 0,16 Al₂O₃ : 0,1 K₂O : 2,3 H₂O (I)

### 1.2. Raccordement de deux câbles résistants au feu

Deux câbles identiques ont été utilisés dans le présent exemple. Chaque câble comprenait quatre éléments électriquement conducteurs allongés en cuivre de section 50 mm², chacun des quatre éléments électriquement conducteurs allongés en cuivre étant isolé par une couche électriquement isolante, et une gaine électriquement isolante entourant lesdits quatre éléments électriquement conducteurs allongés en cuivre isolés. Les couches électriquement isolantes étaient à base d'un polyorganosiloxane réticulé. La gaine électriquement isolante était de type HFFR à base d'un copolymère d'éthylène-acétate de vinyle (EVA).

Les extrémités desdits câbles destinées à être connectées ont été dénudées.

Puis, un tube en matériau thermorétractable commercialisé par Huber-Suhner Suisse sous la référence Sucofit a été placé autour desdits câbles et en particulier autour des extrémités dénudées desdits câbles. Le tube pouvait à ce stade être déplacé manuellement selon l'axe longitudinal des câbles, notamment afin de pouvoir visualiser les extrémités dénudées et les abouter manuellement.

Les extrémités dénudées desdits câbles ont ainsi été aboutées manuellement et connectées de façon permanente au moyen d'un élément métallique (connecteur conventionnel) par sertissage.

Enfin, le tube en matériau thermorétractable a été à nouveau déplacé selon l'axe longitudinal des câbles de manière à le positionner au niveau des extrémités dénudées et aboutées desdits câbles (i.e. zone de connexion) ; puis il a été rétracté par chauffage, de manière à former une couche constituée dudit matériau thermorétractable. Les extrémités dénudées et aboutées desdits câbles recouvertes de façon permanente par la couche constituée dudit matériau thermorétractable ont ainsi été obtenues.

La composition géopolymère préparée dans l'exemple 1.1 a été moulée autour de la couche constituée d'un matériau thermorétractable à l'aide d'un moule cylindrique.

L'ensemble (câbles et connexion) a alors été séché à température ambiante pendant 24 heures, puis démoulé.

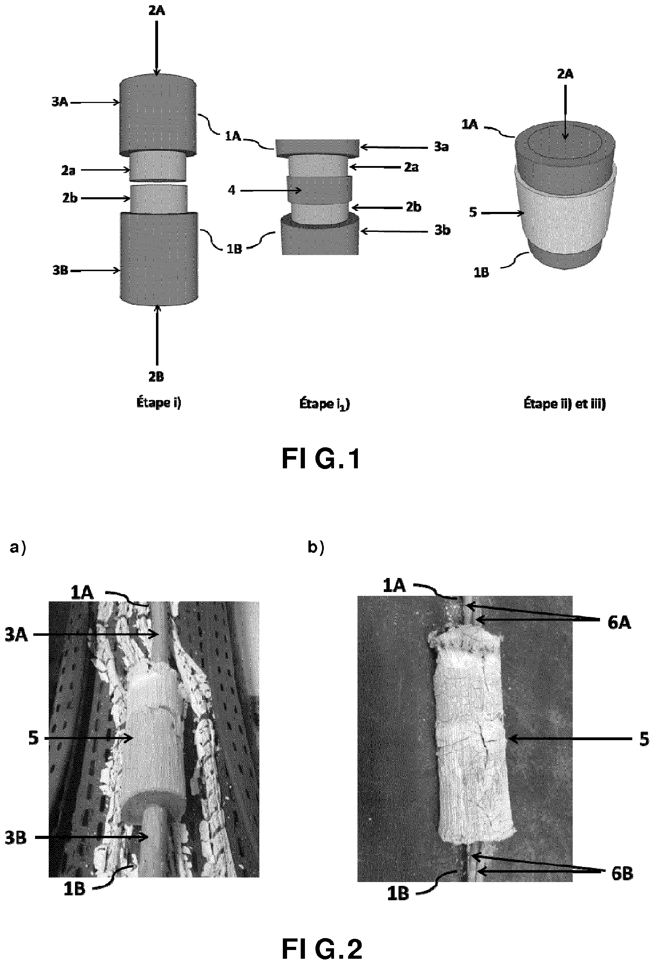

La figure 1 est une représentation schématique du procédé conforme à la présente invention.

Le procédé décrit dans la figure 1 concerne le raccordement de deux câbles résistants au feu (1A, 1B) comprenant chacun un élément électriquement conducteur allongé (2A, 2B) et une gaine électriquement isolante (3A, 3B) entourant ledit élément électriquement conducteur allongé (2A, 2B).

Selon une première étape i), les extrémités destinées à être connectées desdits câbles (1A, 1B) ont été dénudées et aboutées.

Puis, selon une étape i₁), les extrémités dénudées et aboutées (2a, 2b) sont connectées de façon permanente au moyen d'un élément métallique (4) par sertissage (zone de connexion).

Enfin, selon une étape ii), une composition géopolymère est moulée autour desdites extrémités dénudées et aboutées (2a, 2b) desdits câbles (1A, 1B) et d'une partie (3a, 3b) de chaque gaine électriquement isolante (3A, 3B).

Après l'étape iii) de durcissement de la composition géopolymère à température ambiante, une couche (5) comportant au moins un ciment géopolymère est formée autour de l'élément métallique (4), desdites extrémités dénudées et aboutées (2a, 2b) desdits câbles (1A, 1B) et d'une partie (3a, 3b) de chaque gaine électriquement isolante (3A, 3B).

### 1.3. Performances de la connexion

La connexion de câble comprenant une couche de ciment géopolymère et un élément métallique a été évaluée au regard des performances de résistance à la flamme. L'ensemble a été placé dans un four et exposé à une température proche de 1000°C pendant 2 heures.

La figure 2 représente des images de la connexion de câbles avant le test d'exposition à une température proche de 1000°C pendant 2 heures (figure 2a) et de la connexion de câbles après le test (figure 2b).

Comme on peut le voir sur la figure 2, après le test, la cohésion mécanique rémanente de la couche de ciment géopolymère (5) indique que le ciment géopolymère protège la zone de connexion définie par les extrémités dénudées et aboutées (2a, 2b) des câbles (1A, 1B). Les couches électriquement isolantes (6A, 6B) respectivement en dessous de chaque gaine électriquement isolante (3A, 3B) de chacun des câbles (1A, 1B) entourant les éléments électriquement conducteurs allongés (2A, 2B) sont très faiblement détériorées. Par conséquent, la couche de ciment géopolymère (5) limite très fortement les transferts thermiques. Par ailleurs, il a été noté que la partie intérieure de la zone de connexion est parfaitement intacte et qu'aucune trace de dégradation ou de surchauffe n'est visible. La gaine électriquement isolante (3A, 3B), quant à elle, ne résiste pas à de telles températures et se dégrade par combustion.

## Revendications

1. Connexion d'au moins deux câbles (1A, 1B) résistants au feu comprenant chacun au moins un élément électriquement conducteur allongé (2A, 2B) et au moins une gaine électriquement isolante (3A, 3B) entourant ledit élément électriquement conducteur allongé (2A, 2B), les extrémités desdits câbles (2a, 2b) destinées à être connectées étant dénudées et aboutées de manière à assurer un contact physique et électrique entre lesdits câbles (1A, 1B), ladite connexion étant **caractérisée en ce qu'**elle comprend au moins une couche (5) comportant au moins un matériau cimentaire et entourant une partie de chaque gaine électriquement isolante (3a, 3b) et lesdites extrémités dénudées et aboutées desdits câbles (2a, 2b), ledit matériau cimentaire étant un matériau solide comprenant du silicium (Si), de l'aluminium (Al), de l'oxygène (O) et au moins un élément choisi parmi le potassium (K), le sodium (Na), le lithium (Li), le césium (Cs) et le calcium (Ca), ledit matériau solide étant un ciment géopolymère ou étant issu d'un mélange constitué d'un ciment anhydre conventionnel et d'eau.

2. Connexion selon la revendication 1, **caractérisée en ce que** la couche (5) comportant au moins un matériau cimentaire est en contact physique direct avec la partie de chaque gaine électriquement isolante (3a, 3b) qu'elle entoure.

3. Connexion selon la revendication 1 ou la revendication 2, **caractérisée en ce qu'**elle comprend en outre un élément métallique (4) permettant de connecter de façon permanente lesdites extrémités dénudées et aboutées des câbles (2a, 2b).

4. Connexion selon la revendication 3, **caractérisée en ce que** l'élément métallique (4) est en cuivre, en alliage de cuivre, en aluminium ou en alliage d'aluminium.

5. Connexion selon la revendication 3 ou la revendication 4, **caractérisée en ce que** l'élément métallique (4) est en contact physique direct avec au moins une partie des extrémités dénudées et aboutées des câbles (2a, 2b).

6. Connexion selon l'une quelconque des revendications précédentes, **caractérisée en ce qu'**elle comprend en outre une couche constituée d'un matériau thermorétractable.

7. Connexion selon la revendication 6, **caractérisée en ce que** la couche constituée d'un matériau thermorétractable entoure une partie ou la totalité des extrémités dénudées et aboutées desdits câbles (2a, 2b) ou l'élément métallique (4) lorsqu'il est utilisé.

8. Connexion selon la revendication 6 ou la revendication 7, **caractérisée en ce que** la couche constituée d'un matériau thermorétractable est en contact physique direct avec la couche (5) comportant au moins un matériau cimentaire.

9. Connexion selon l'une quelconque des revendications précédentes, **caractérisée en ce que** la couche (5) comportant au moins un matériau cimentaire présente une épaisseur allant de 0,5 à 5 cm.

10. Connexion selon l'une quelconque des revendications précédentes, **caractérisée en ce que** la couche (5) comportant au moins un matériau cimentaire présente une longueur d'au moins L₁ = L₀ + 40, L₀ et L₁ ayant comme unité le cm, et L₀ représentant la longueur des extrémités des câbles dénudées et aboutées (2a, 2b).

11. Connexion selon l'une quelconque des revendications précédentes, **caractérisée en ce que** la gaine électriquement isolante de chacun des câbles résistants au feu (3A, 3B) représente la couche la plus externe dudit câble (1A, 1B).

12. Connexion selon la revendication 11, **caractérisée en ce que** le ciment anhydre est du ciment Portland ou du ciment au laitier et aux cendres.

13. Connexion selon la revendication 11, **caractérisée en ce que** le ciment géopolymère est un ciment géopolymère aluminosilicate.

14. Procédé de raccordement d'au moins deux câbles (1A, 1B) résistants au feu comprenant chacun au moins un élément électriquement conducteur allongé (2A, 2B) et au moins une gaine électriquement isolante (3A, 3B) entourant ledit élément électriquement conducteur allongé (2A, 2B), ledit procédé étant **caractérisé en ce qu'**il met en oeuvre une connexion telle que définie à l'une quelconque des revendications 1 à 13 et **en ce qu'**il comprend au moins les étapes suivantes :
i) une étape de mise à nu des extrémités (2a, 2b) desdits câbles (1A, 1B) destinées à être connectées et d'aboutement desdites extrémités mises à nu desdits câbles,
ii) une étape de moulage d'une composition géopolymère ou d'un mélange constitué d'un ciment anhydre conventionnel et d'eau, autour desdites extrémités dénudées et aboutées desdits câbles (2a, 2b) et d'une partie de chaque gaine électriquement isolante (3a, 3b), et
iii) une étape de durcissement de la composition géopolymère ou du mélange constitué d'un ciment anhydre conventionnel et d'eau pour former une couche (5) comportant au moins un matériau cimentaire et entourant une partie de chaque gaine électriquement isolante (3a, 3b) et lesdites extrémités dénudées et aboutées desdits câbles (2a, 2b).

15. Utilisation d'une connexion telle que définie à l'une quelconque des revendications 1 à 13, pour rallonger une ligne de câble(s) résistante au feu ou pour remplacer une partie défectueuse d'une ligne de câble(s) résistante au feu.

16. Ligne de câble résistante au feu comprenant au moins :
- un premier câble (1A) résistant au feu comprenant au moins un élément électriquement conducteur allongé (2A) et au moins une gaine électriquement isolante (3A) entourant ledit élément électriquement conducteur allongé (2A), et
- une second câble (1B) résistant au feu comprenant au moins un élément électriquement conducteur allongé (2B) et au moins une gaine électriquement isolante (3B) entourant ledit élément électriquement conducteur allongé (2B),
les extrémités (2a, 2b) desdits câbles destinées à être connectées étant dénudées et aboutées de manière à assurer un contact physique et électrique entre lesdits câbles (1A, 1B),
ladite ligne de câble étant **caractérisée en ce qu'**elle comprend en outre, une connexion telle que définie à l'une quelconque des revendications 1 à 13.

## Patentansprüche

1. Verbindung von mindestens zwei feuerbeständigen Kabeln (1A, 1B), umfassend jeweils mindestens ein längliches elektrisch leitendes Element (2A, 2B) und mindestens eine elektrisch isolierende Hülle (3A, 3B), die das längliche elektrisch leitende Element (2A, 2B) umgibt, wobei die Enden der Kabel (2a, 2b) bestimmt sind, verbunden zu sein, wobei sie abisoliert sind und derart aneinander anstoßen, dass ein physischer und elektrischer Kontakt zwischen den Kabeln (1A, 1B) gesichert ist, wobei die Verbindung **dadurch gekennzeichnet ist, dass** sie mindestens eine Schicht (5) umfasst, die mindestens ein Zementmaterial aufweist und einen Teil jeder elektrisch isolierende Hülle (3a, 3b) und die abisolierten und aneinander anstoßenden Enden der Kabel (2a, 2b) umgibt, wobei das Zementmaterial ein festes Material ist, das Silicium (Si), Aluminium (Al), Sauerstoff (O) und mindestens ein Element umfasst, das aus dem Kalium (K), dem Natrium (Na), dem Lithium (Li), dem Cäsium (Cs) und dem Calcium (Ca) ausgewählt ist, wobei das feste Material ein geopolymere Zement ist oder aus einem Gemisch gebildet ist, das aus einem konventionellen wasserfreien Zement und Wasser besteht.

2. Verbindung nach Anspruch 1, **dadurch gekennzeichnet, dass** die Schicht (5), die mindestens ein Zementmaterial aufweist, in direktem physischem Kontakt mit dem Teil jeder elektrisch isolierenden Hülle (3a, 3b) ist, die sie umgibt.

3. Verbindung nach Anspruch 1 oder Anspruch 2, **dadurch gekennzeichnet, dass** sie ferner ein metallisches Element (4) umfasst, das erlaubt, die abisolierten und aneinander anstoßenden Enden der Kabel (2a, 2b) ständig zu verbinden.

4. Verbindung nach Anspruch 3, **dadurch gekennzeichnet, dass** das metallische Element (4) aus Kupfer, aus Kupferlegierung, aus Aluminium oder aus Aluminiumlegierung ist.

5. Verbindung nach Anspruch 3 oder Anspruch 4, **dadurch gekennzeichnet, dass** das metallische Element (4) in direktem physischem Kontakt mit mindestens einem Teil der abisolierten und aneinander anstoßenden Enden der Kabel (2a, 2b) ist.

6. Verbindung nach einem der vorangehenden Ansprüche, **dadurch gekennzeichnet, dass** sie ferner eine Schicht umfasst, die aus einem wärmeschrumpfbaren Material besteht.

7. Verbindung nach Anspruch 6, **dadurch gekennzeichnet, dass** die Schicht, die aus einem wärmeschrumpfbaren Material besteht, einen Teil oder die Gesamtheit der abisolierten und aneinander anstoßenden Enden der Kabel (2a, 2b) oder das metallische Element (4) umgibt, wenn es verwendet wird.

8. Verbindung nach Anspruch 6 oder Anspruch 7, **dadurch gekennzeichnet, dass** die Schicht, die aus einem wärmeschrumpfbaren Material besteht, in direktem physischem Kontakt mit der Schicht (5) ist, die mindestens ein Zementmaterial aufweist.

9. Verbindung nach einem der vorangehenden Ansprüche, **dadurch gekennzeichnet, dass** die Schicht (5), die mindestens ein Zementmaterial aufweist, eine Stärke aufweist, die von 0,5 bis 5 cm reicht.

10. Verbindung nach einem der vorangehenden Ansprüche, **dadurch gekennzeichnet, dass** die Schicht (5), die mindestens ein Zementmaterial aufweist, eine Länge von mindestens L₁ = L₀ + 40 aufweist, wobei L₀ und L₁ als Einheit den cm haben, und L₀ die Länge der abisolierten und aneinander anstoßenden Enden der Kabel (2a, 2b) darstellt.

11. Verbindung nach einem der vorangehenden Ansprüche, **dadurch gekennzeichnet, dass** die elektrisch isolierende Hülle jedes der feuerbeständigen Kabel (3A, 3B) die äußerste Schicht des Kabels (1A, 1B) darstellt.

12. Verbindung nach Anspruch 11, **dadurch gekennzeichnet, dass** der wasserfreie Zement Portlandzement oder ein Zement mit Schlacke und Aschen ist.

13. Verbindung nach Anspruch 11, **dadurch gekennzeichnet, dass** der geopolymere Zement ein geopolymerer Aluminosilikatzement ist.

14. Verfahren zum Anschluss von mindestens zwei feuerbeständigen Kabeln (1A, 1B), umfassend jeweils mindestens ein längliches elektrisch leitendes Element (2A, 2B) und mindestens eine elektrisch isolierende Hülle (3A, 3B), die das längliche elektrisch leitende Element (2A, 2B) umgibt, wobei das Verfahren **dadurch gekennzeichnet ist, dass** es eine Verbindung nach einem der Ansprüche 1 bis 13 umsetzt und dass es mindestens die folgenden Schritte umfasst:
i) einen Schritt des Abisolierens der Enden (2a, 2b) der Kabel (1A, 1B), die zum Verbinden und zum aneinander Anstoßen der abisolierten Kabelenden bestimmt sind,
ii) einen Schritt des Formen seiner geopolymeren Zusammensetzung oder eines Gemischs, gebildet aus einem konventionellen wasserfreien Zement und Wasser, um abisolierte und aneinander anstoßende Enden der Kabel (2a, 2b) und einen Teil jeder elektrisch isolierenden Hülle (3a, 3b), und
iii) einen Schritt des Härtens der geopolymeren Zusammensetzung oder des Gemischs, gebildet aus einem konventionellen wasserfreien Zement und Wasser, um eine Schicht (5) zu bilden, die mindestens ein Zementmaterial aufweist und einen Teil jeder elektrisch isolierenden Hülle (3a, 3b) und die abisolierten und aneinander anstoßenden Enden der Kabel (2a, 2b) umgibt.

15. Verwendung einer Verbindung nach einem der Ansprüche 1 bis 13 zum Verlängern einer feuerbeständigen Kabelleitung oder zum Ersetzen eines defekten Teils einer feuerbeständigen Kabelleitung.

16. Feuerbeständige Kabelleitung, umfassend mindestens:
- ein erstes feuerbeständiges Kabel (1A), umfassend mindestens ein längliches elektrisch leitendes Element (2A) und mindestens eine elektrisch isolierende Hülle (3A), die das längliche elektrisch leitende Element (2A) umgibt, und
- ein zweites feuerbeständiges Kabel (1B), umfassend mindestens ein längliches elektrisch leitendes Element (2B) und mindestens eine elektrisch isolierende Hülle (3B), die das längliche elektrisch leitende Element (2B) umgibt,
wobei die Enden (2a, 2b) der Kabel, die zum Verbinden bestimmt sind, derart abisoliert sind und aneinander anstoßen, dass ein physischer und elektrischer Kontakt zwischen den Kabeln (1A, 1B) gesichert ist,
wobei die Kabelleitung **dadurch gekennzeichnet ist, dass** sie ferner eine Verbindung nach einem der Ansprüche 1 bis 13 umfasst.

## Claims

1. Connection of at least two fire-resistant cables (1A, 1B) each comprising at least one elongated electrically conductive element (2A, 2B) and at least one electrically insulating sheath (3A, 3B) surrounding said elongated electrically conductive element (2A, 2B), the ends of said cables (2a, 2b) intended to be connected being stripped and joined so as to ensure physical and electrical contact between said cables (1A, 1B), said connection being **characterized in that** it comprises at least one layer (5) comprising at least one cementitious material and surrounding a portion of each electrically insulating sheath (3a, 3b) and said stripped and joining ends of said cables (2a, 2b), said cementitious material being a solid material comprising silicon (Si), aluminum (Al), oxygen (O) and at least one element selected from potassium (K), sodium (Na), lithium (Li), cesium (Cs) and calcium (Ca), said solid material being a geopolymer cement or being derived from a mixture of conventional anhydrous cement and water.

2. Connection according to claim 1, **characterized in that** the layer (5) comprising at least one cementitious material is in direct physical contact with the portion of each electrically insulating sheath (3a, 3b) it surrounds.

3. Connection according to claim 1 or claim 2, **characterized in that** it further comprises a metal element (4) for permanently connecting said stripped and joined ends of the cables (2a, 2b).

4. Connection according to claim 3, **characterized in that** the metal element (4) is copper, copper alloy, aluminum or aluminum alloy.

5. Connection according to claim 3 or claim 4, **characterized in that** the metal element (4) is in direct physical contact with at least a portion of the stripped and joined ends of the cables (2a, 2b).

6. Connection according to any one of the preceding claims, **characterized in that** it further comprises a layer consisting of a heat-shrinkable material.

7. Connection according to claim 6, **characterized in that** the layer consisting of a heat-shrinkable material surrounds a portion or all of the stripped and joined ends of said cables (2a, 2b) or the metal element (4) when this is used.

8. Connection according to claim 6 or claim 7, **characterized in that** the layer consisting of a heat-shrinkable material is in direct physical contact with the layer (5) comprising at least one cementitious material.

9. Connection according to any one of the preceding claims, **characterized in that** the layer (5) comprising at least one cementitious material has a thickness ranging from 0.5 to 5 cm.

10. Connection according to any one of the preceding claims, **characterized in that** the layer (5) comprising at least one cementitious material has a length of at least L₁ = L₀ + 40, L₀ and L₁ having the unit cm, and L₀ representing the length of the ends of the stripped and joined cables (2a, 2b).

11. Connection according to any one of the preceding claims, **characterized in that** the electrically insulating sheath of each of the fire-resistant cables (3A, 3B) represents the outermost layer of said cable (1A, 1B).

12. Connection according to claim 11, **characterized in that** the anhydrous cement is Portland cement or cement slag and ash.

13. Connection according to claim 11, **characterized in that** the geopolymer cement is an aluminosilicate geopolymer cement.

14. Method of connecting at least two fire-resistant cables (1A, 1B) each comprising at least one elongated electrically conductive element (2A, 2B) and at least one electrically insulating sheath (3A, 3B) surrounding said elongated electrically conductive element (2A, 2B), said method being **characterized in that** it implements a connection as defined in any one of claims 1 to 13 and **in that** it comprises at least the following steps:
i) a step of exposing the ends (2a, 2b) of said cables (1A, 1B) intended to be connected and joining said exposed ends of said cables,
ii) a step of molding a geopolymer composition or a mixture of a conventional anhydrous cement and water, around said stripped and joined ends of said cables (2a, 2b) and a portion of each electrically insulating sheath (3a, 3b), and
iii) a step of hardening the geopolymer composition or the mixture of a conventional anhydrous cement and water to form a layer (5) comprising at least one cementitious material and surrounding a portion of each electrically insulating sheath (3a, 3b) and said stripped and joined ends of said cables (2a, 2b).

15. Use of a connection as defined in any one of claims 1 to 13, for extending fire-resistant cable line(s) or replacing a defective part of fire-resistant cable line(s).

16. Fire resistant cable line comprising at least:
- a first fire-resistant cable (1A) comprising at least one elongated electrically conductive element (2A) and at least one electrically insulating sheath (3A) surrounding said elongated electrically conductive element (2A), and
- a second fire-resistant cable (1B) comprising at least one elongated electrically conductive element (2B) and at least one electrically insulating sheath (3B) surrounding said elongated electrically conductive element (2B),
- the ends (2a, 2b) of said cables intended to be connected being stripped and joined so as to ensure physical and electrical contact between said cables (1A, 1B),
- said cable line being **characterized in that** it further comprises a connection as defined in any one of claims 1 to 13.
